# FASCICULE DE BREVET EUROPEEN

(11) **EP 1 074 858 B1**
(45) Date de publication et mention de la délivrance du brevet: **03.12.2003**
(21) Numéro de dépôt: 00402033.5
(22) Date de dépôt: 17.07.2000
(51) Int. Cl.: G01V 1/28

(54) **Methode d'analyse de signaux acquis pour pointer automatiquement sur eux au moins un instant significatif**
Verfahren zur Analyse aufgezeichneter Signale, um aus ihnen automatisch mindestens einen signifikanten Zeitwert auszuwählen
Method of analysing recorded signals by automatically selecting from them at least one significant time event

(30) Priorité: 28.07.1999 FR 9909883
(43) Date de publication de la demande: 07.02.2001
(73) Titulaire: GAZ DE FRANCE, 75017 Paris (FR); Institut Français du Pétrole, 92852 Rueil-Malmaison Cedex (FR)
(72) Inventeur: Deflandre, Jean-Pierre, 95120 Ermont (FR)
(74) Mandataire: Benoist, François

(56) Documents cités:
- WO-A-99/03004
- FR-A- 2 614 997
- FR-A- 2 650 676
- US-A- 4 516 206
- ERVIN C P ET AL: "Automated analysis of marine refraction data: a computer algorithm" GEOPHYSICS, MAY 1983, USA, vol. 48, no. 5, pages 582-589, XP002137888 ISSN: 0016-8033

## Description

La présente invention concerne une méthode d'analyse de signaux reçus sur des capteurs d'ondes élastiques permettant par exemple de pointer automatiquement avec une grande précision des instants significatifs tels que les instants de première arrivée sur les différents capteurs et/ou les instants de fin de ces mêmes signaux.

La méthode peut trouver des applications dans de nombreux domaines où l'on doit pointer avec une grande précision les instants d'arrivée de signaux vibratoires. C'est le cas notamment dans le cadre de systèmes de surveillance sismique active ou passive de gisements souterrains en cours d'exploitation utilisés d'une façon générale soit pour en extraire des fluides, soit pour y injecter des fluides.

### ETAT DE LA TECHNIQUE

Par les brevets FR 2 593 292 (US 4,775,009), FR 2 681 373 (US 5,303,773), FR 2 685 139 (US 5,370,546) et FR 2 703 470 notamment, on connaît différentes techniques pour surveiller l'évolution au cours du temps de réservoirs souterrains comportant l'utilisation de capteurs sismiques ou autres installés à demeure dans un ou plusieurs puits, sans perturber les opérations diverses (production, ou injection de fluides, interventions diverses menées par l'intermédiaire de ces puits). L'installation de ces capteurs à demeure dans des puits, permet d'exercer une surveillance sismique d'un réservoir dans le but de détecter différents phénomènes liés à son exploitation. Les capteurs sismiques permanents sont installés par exemple à l'extérieur d'un casing ou cuvelage que l'on descend dans le puits. Ils sont noyés dans le ciment qui est normalement injecté dans l'espace annulaire entre lui et le puits et qui assure leur bon couplage avec les formations environnantes. Les capteurs sismiques peuvent encore être fixés à l'extérieur d'une colonne d'exploitation qui est installée dans un puits lors des opérations de complétion. Ils sont associés à des moyens mobiles adaptés à les plaquer contre le casing du puits, et à des moyens de découplage pour filtrer les vibrations se propageant le long de la colonne d'exploitation.

Par les brevets FR 2 703 457, FR 2 703 470 ou FR 2 728 973 (US 5,724,311), on connaît aussi des méthodes de surveillance active répétitive à long terme d'un réservoir par application d'ondes élastiques à une formation et acquisition des signaux-réponses renvoyés par la formation, ceci au moyen d'une installation permanente de moyens d'émission et de réception dans des puits ou au voisinage de la surface du sol. On réalise des traitements différentiels sur des acquisitions opérées dans des conditions identiques.

Par le brevet FR 2 772 137, on connaît aussi une méthode permettant de simplifier les problèmes de discrimination et d'identification, d'événements sismiques ou microsismiques relatifs à l'exploitation d'une zone souterraine. On utilise un ou plusieurs capteurs de référence présentant un couplage acoustique direct avec des éléments de l'équipement technique d'exploitation de la zone qui peuvent détecter aussi des ondes liées directement à l'exploitation. L'analyse comparée des signaux issus des différents récepteurs et de chaque capteur de référence, permet de trier les enregistrements en différentes familles selon que les événements dans la zone souterraine sont indépendants des événements détectés par chaque capteur de référence ou en dépendent directement ou indirectement. On peut établir un catalogue d'événements-types ayant un lien causal avec des interventions d'exploitation sur la zone souterraine, par corrélation entre les enregistrements des signaux reçus respectivement par les dits récepteurs et le (ou chaque) capteur de référence, et ainsi identifier la nature des événements sismiques ou microsismiques.

La détermination précise des instants d'arrivée des signaux reçus par plusieurs récepteurs couplés avec la formation souterraine rend possible la localisation des lieux d'émission (points-sources ou foyers) où se produisent des événements qui sont liés directement ou indirectement à une activité ayant pour effet de modifier le champ de contraintes : opérations d'injection ou de soutirage de fluides par un ou plusieurs puits par exemple.

Ceci permet à l'exploitant d'un site d'interpréter très rapidement les données de position obtenues en relation avec les données classiques d'exploitation (pression, débit, température etc.) de sorte qu'il peut prendre en compte la réponse mécanique du site dans le protocole d'exploitation afin de préserver la productivité du ou des puits voire du site.

Cependant, la méthode la plus courante pour détecter avec précision les instants significatifs des signaux reçus lors d'opérations de surveillance sismique d'une zone souterraine consiste essentiellement pour l'opérateur à visionner tous les enregistrements obtenus et à pointer lui-même les instants (de première arrivée) où ils se produisent sur tous les capteurs. C'est là une opération qui s'avère longue et fastidieuse quand on doit dépouiller une grande masse d'enregistrements systématiques effectués sur de longues durées.

### LA METHODE SELON L'INVENTION

La méthode selon l'invention d'analyse de signaux acquis provenant d'au moins un capteur d'ondes, permet de détecter automatiquement avec une grande précision, au moins un instant significatif de chaque signal tel que l'instant de sa première arrivée (ti) ou l'instant de sa fin (tf), et donc de simplifier les opérations de dépouillement et de tri préalables à l'interprétation.

Elle comporte :
- la détermination de la pseudo-période correspondant à l'inverse de la fréquence dominante du spectre de fréquence d'au moins une partie de chaque signal acquis,
- le codage de chaque signal acquis pour former un signal codé en binaire par référence à une première valeur-seuil dépendant du signal acquis (codage à la valeur 1 ou 0 par exemple, selon que sa valeur absolue est au-dessus ou au-dessous de cette valeur-seuil),
- la formation pour chacun d'eux d'un signal intégral par sommation du signal codé en binaire sur une fenêtre glissante de manière à déterminer une deuxième valeur-seuil (dépendant de préférence de l'amplitude maximale de ce signal intégral), et
- le positionnement de l'instant significatif sur le signal acquis par référence à un instant où le signal intégral correspondant atteint cette deuxième valeur-seuil.

Pour positionner l'instant significatif de chaque signal acquis on détermine par exemple un premier point de référence où l'amplitude du signal intégral correspondant est égal à cette deuxième valeur-seuil, on détecte un premier instant intermédiaire entre ce premier point de référence et la borne la plus proche du dit signal intégral (le début, si l'on cherche à détecter l'instant de première arrivée), on détecte aussi un deuxième instant intermédiaire entre ce premier instant intermédiaire et la borne opposée du signal intégral (la fin, dans la même hypothèse) où ce signal intégral dépasse une troisième valeur-seuil dépendant du signal acquis. On repère alors l'instant significatif recherché sur le signal acquis à un quart de pseudo-période du deuxième instant intermédiaire (en amont ou en aval selon qu'il s'agit de l'instant de la première arrivée ou de l'instant de fin de chaque signal acquis).

On peut à la fois déterminer l'instant de la première arrivée de chaque signal acquis et l'instant de fin de chaque signal acquis et isoler sur les enregistrements des signaux reçus par chaque capteur d'ondes, des parties d'enregistrement entre ces deux instants.

On peut aussi, sur un même signal acquis, isoler toutes les parties d'enregistrement délimitées par différents instants significatifs de manière à détecter toutes les arrivées distinctes sur un même capteur d'ondes.

La méthode peut comporter aussi une analyse des signaux reçus respectivement par une pluralité de capteurs d'ondes relatifs à un même événement générateur de signaux élastiques, une détermination de la polarisation de chaque signal acquis immédiatement après son instant de première arrivée et une détection des arrivées successives d'ondes de compression et d'ondes de cisaillement par comparaison des orientations des vecteurs propres liés aux polarisations respectives de ces signaux.

La méthode peut aussi comporter une analyse des signaux acquis provenant respectivement d'une pluralité de capteurs d'ondes relatifs à un même événement générateur de ces signaux, une détermination de la polarisation de chaque signal acquis immédiatement après son instant de première arrivée et une détection de multiplets par comparaison des orientations des vecteurs propres liés aux polarisations respectives de ces signaux.

La méthode selon l'invention permet la détection automatique de l'arrivée d'une onde (notamment sismique) avec une très bonne précision. Elle est donc auto-adaptative car elle atteint son objectif : évaluation de la fréquence dominante de chaque signal acquis et utilisation de la pseudo-période correspondant à cette fréquence dominante pour investiguer un signal intégral (codé en binaire et sommé) établi à partir du signal initial brut, en tenant compte pour cela d'un jeu de quelques paramètres ajustables en fonction des conditions locales d'acquisition des signaux, mais dépendant du signal lui-même.

Elle facilite donc la localisation automatique des événements microsismiques présentant une succession d'ondes de compression et de cisaillement et, si ces événements sont détectés par un nombre suffisant de capteurs espacés elle permet une triangulation automatique à partir des temps d'arrivée ainsi déterminés, le modèle de vitesse étant connu par ailleurs.

D'autres caractéristiques et avantages de la méthode selon l'invention, apparaîtront à la lecture de la description ci-après d'un exemple non limitatif de réalisation, en se référant aux dessins annexés où :
- les Fig.1a à 1c montrent un exemple de signaux captés respectivement sur les trois composantes d'un géophone à trois voies ( dit triphone) ;
- les Fig.2a à 2c montrent respectivement les signaux de la Fig.1 à plus grande échelle ;
- la Fig.3a montre le codage binaire, appliqué à un signal, à 1 ou 0 selon qu'il dépasse ou non un niveau-seuil ;
- la Fig.3b montre le signal intégral formé par la sommation du signal codé de la Fig.3a, sur une fenêtre glissante ;
- les Fig. 4a à 4c montrent respectivement les signaux intégraux formés à partir des signaux respectivement des Fig.1a à 1c ou 2a à 2c ; et

### DESCRIPTION DETAILLEE

### I) Etapes préliminaires

I-1) On acquiert numériquement chaque signal avec une fréquence d'échantillonnage suffisante f_{ech} (2400 Hz par exemple dans l'exemple présenté) depuis un instant initial précédant suffisamment les possibles premières arrivées de faible amplitude de façon à ne pas les manquer (zone de pré-déclenchement).
I-2) De préférence, on filtre le signal acquis par chaque capteur sans le déphaser pour ne conserver que le spectre de fréquence dont on aura au préalable fixé les limites supérieure et inférieure "fmin" et "fmax" (paramètres modifiables fixés par exemple à 5 Hz et 300 Hz).
1-3) De préférence, on filtre également chaque signal acquis au moyen d'un filtre médian paramétré MF afin d'éliminer les pics parasites sortant du niveau de bruit et de durée voisine de la période d'échantillonnage du signal.
   Les deux opérations de filtrage précédentes sont recommandées mais facultatives.
1-4) On calcule la fréquence dominante F_{dom} dans le signal par une technique connue d'analyse spectrale (FFT par exemple). S'il y a des écarts entre les valeurs de F_{dom} obtenues sur les différentes voies d'un capteur à trois composantes, on détermine une valeur moyenne. On en déduit la pseudo-période correspondante : T_{PS} =1/ F_{dom}, ce qui permet de déterminer le nombre de périodes (points) d'échantillonnage np par pseudo-période T_{PS} de signal : np=f_{ech}/F_{dom}

### II) Phases de détection de l'instant de première arrivée d'une onde

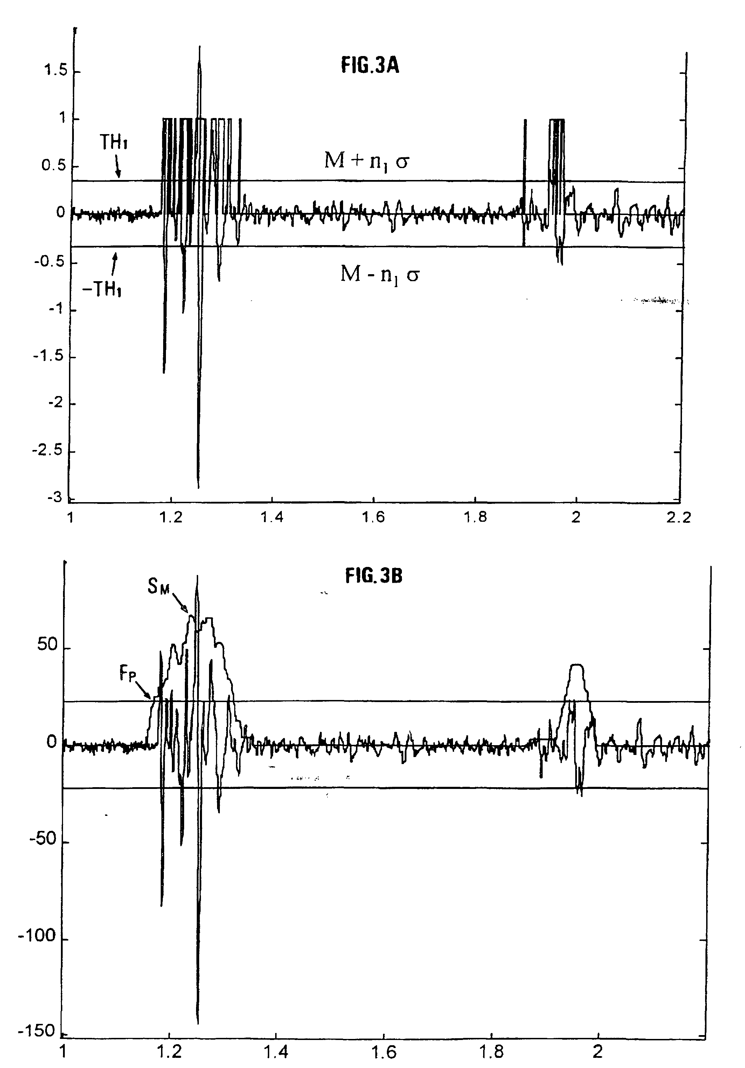

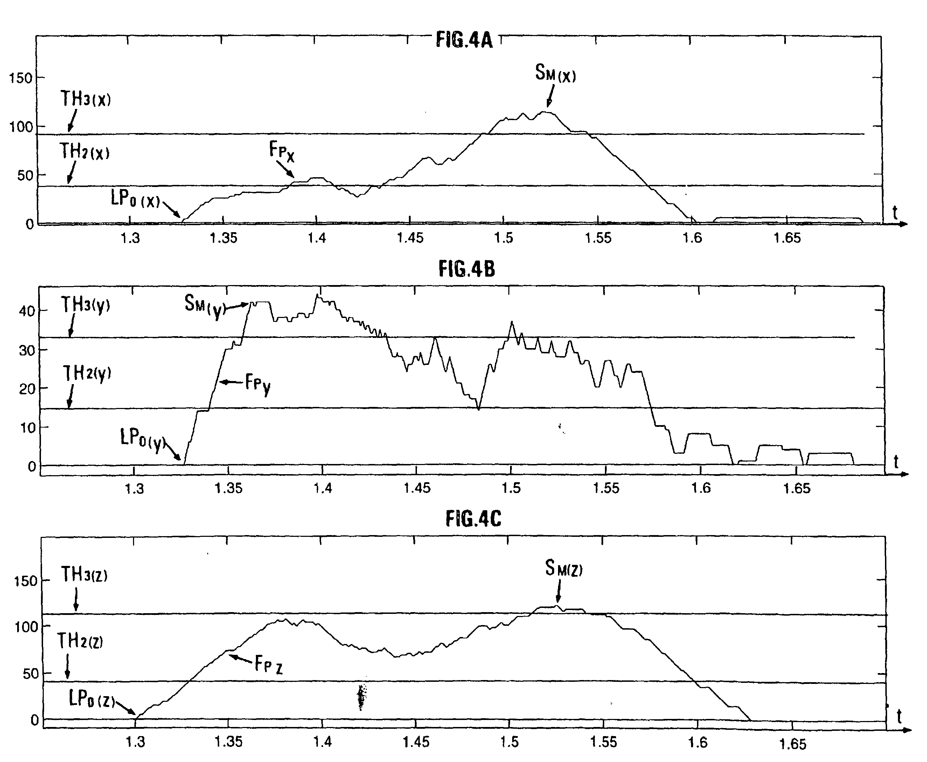

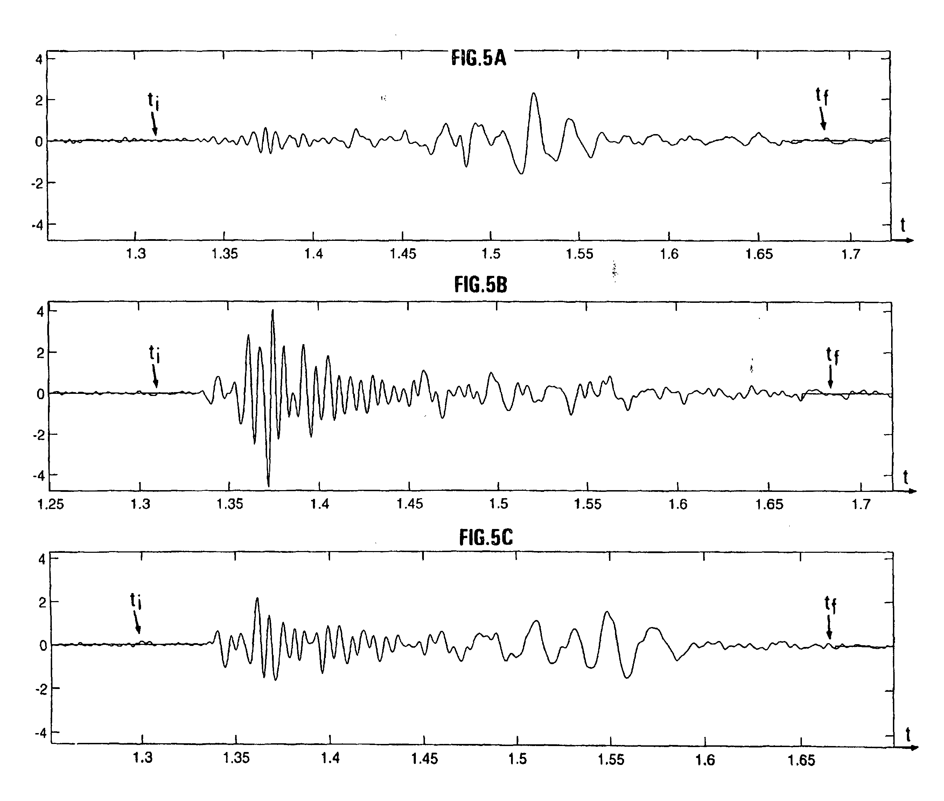

II-1) Calcul de la moyenne M et de l'écart-type σ sur le signal acquis en pré-déclenchement sur une fenêtre W de durée w.np, où w est une durée élémentaire modifiable à volonté.
II-2) Formation d'un signal E_{c} codé en binaire (Fig.3a) obtenu en codant à 1 tout échantillon de signal dont le niveau en valeur absolue est supérieur ou égal à une valeur-seuil TH1 égale à : M + n₁.σ, et à 0 dans le cas contraire (n₁ étant un coefficient modifiable à volonté, égal à 6 dans le cas décrit).
II-3) Intégration (Fig.3b, 4a à 4c) par sommation sur une fenêtre glissante de largeur w.np des niveaux non nuls, avec affectation de la valeur obtenue dans chaque fenêtre à l'échantillon au milieu de la fenêtre considérée, tous les autres échantillons de cette fenêtre étant affectés de la valeur 0. On désigne par S le signal formé par tous les échantillons centraux des fenêtres glissantes successives.
   Pour diminuer les temps de calcul, il est possible la plupart du temps, d'augmenter le pas de glissement de la fenêtre, sans pour autant altérer sensiblement le résultat.
II-4) S'étant au préalable fixé pour chaque composante un seuil relatif TH2 correspondant au rapport de la valeur maximale S_{M} du signal S (Fig.4a à 4c) à une valeur fixée au préalable Cₛ₁ modifiable si besoin est, on détecte pour chaque composante un événement représentatif en identifiant le premier point F_{P} dépassant ce seuil TH2. Dans l'intervalle allant du début du signal codé sommé S au point F_{P}, on recherche pour chaque composante le dernier point de valeur nulle LP₀.
II-5) On détermine alors l'instant ti de première arrivée du signal en recherchant dans l'intervalle allant de LP₀ à la fin du signal codé sommé S, le premier maximum am qui dépasse le niveau TH3 = M + n₂.σ, où n₂ est comme n₁, un entier modifiable (égal à 7 dans l'exemple traité). L'instant ti s'obtient alors en remontant le signal à partir de ce point d'un quart de pseudo-période soit de np/4 points d'échantillonnage. Dans le cas de signaux à trois composantes si les valeurs déterminées pour chacune des voies diffèrent, alors on applique une convention particulière pour choisir la valeur de ti. En général, on prend par sécurité la valeur la plus basse pour ne pas manquer le premier impétus dans le signal.
II-6) On peut compléter les étapes précédentes par une identification de la polarité du premier mouvement.

En détectant avec précision l'instant de première arrivée, ti, on détermine par là-même avec une bonne fiabilité, la polarité du signal (positive ou négative) aussitôt après sur chacune des voies. Si on connaît cette polarité pour un nombre suffisant de capteurs ayant enregistré l'événement, on peut identifier un mécanisme au foyer sous certaines hypothèses, notamment l'identification du mécanisme bien connu dit de « double-couple » couramment utilisé par les spécialistes.

### III) Phases de détection de la fin et de la durée du signal

L'algorithme de détection décrit au paragraphe précédent peut être appliqué directement pour la détection de l'instant tf de fin du signal en prenant pour référence cette fois-ci la fin du signal.

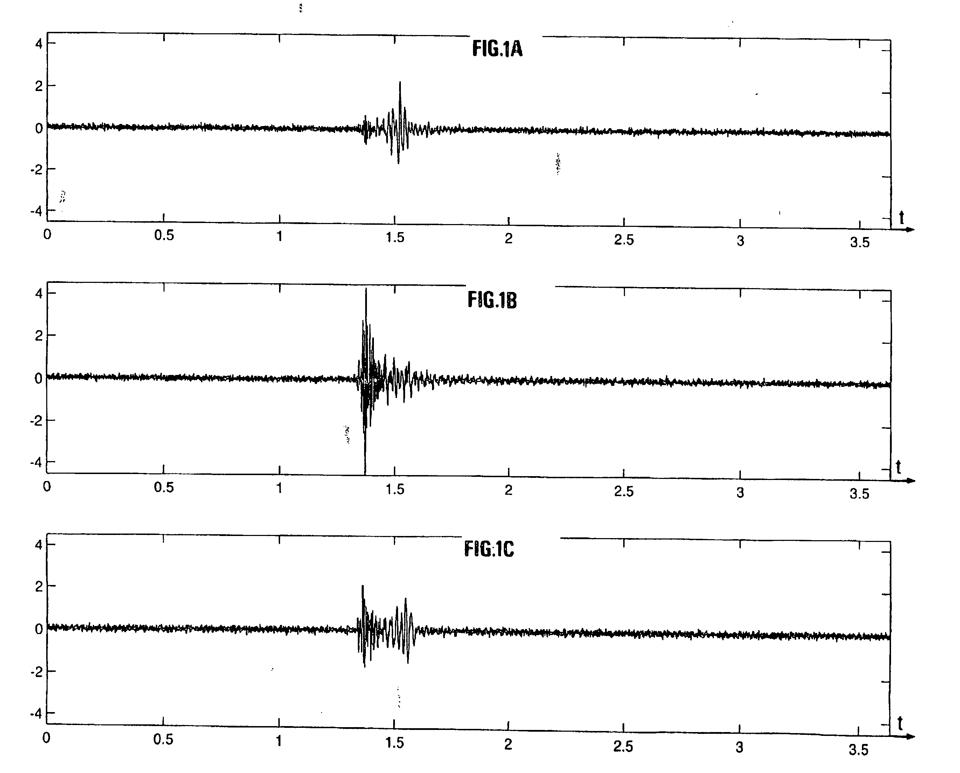

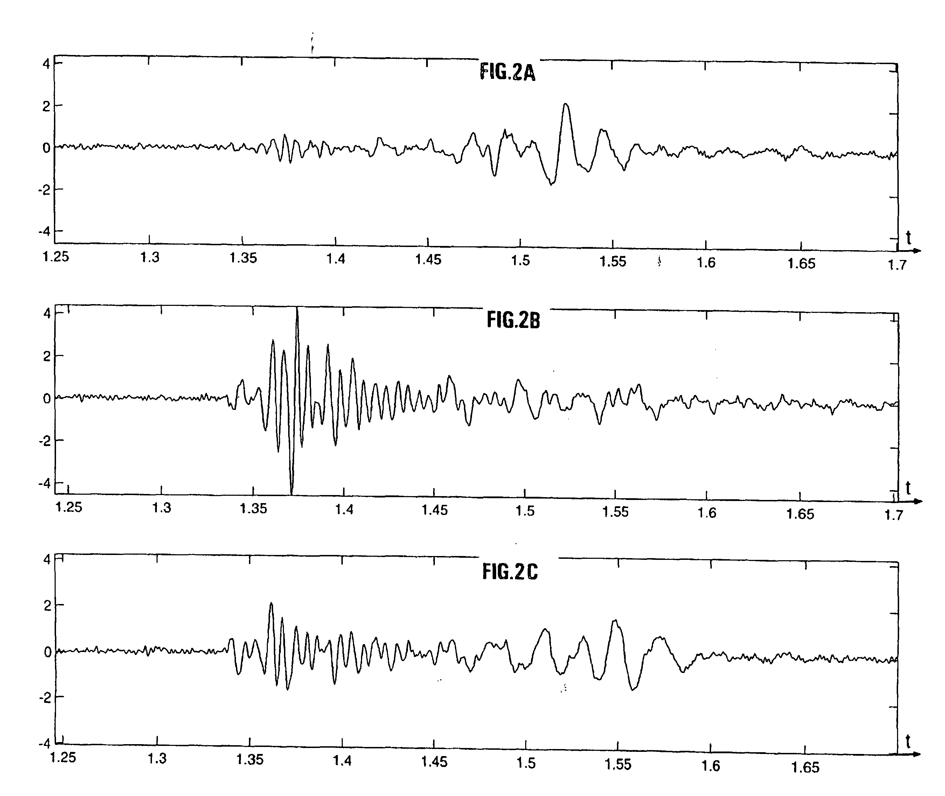

On peut calculer la durée du signal Δt = tf - ti. On extrait le signal utile du fichier du signal initial (Fig.1a-1c ou 2a-2c) dans la plage allant de ti à tf avec la possibilité de garder une zone de pré-déclenchement ainsi qu'une zone de post-déclenchement dont les largeurs peuvent être proportionnelles à la pseudo-période du signal.

### IV) Identification d'arrivée multiples distinctes au sein d'un même fichier signal

1) En pointant les différentes plages de valeurs nulles du signal codé sommé ont peut aisément pointer et de ce fait comptabiliser les arrivées distinctes au sein d'un même fichier signal.
2) Une analyse en polarisation peut être effectuée sur chacune des différentes arrivées pour déterminer pour chacune les vecteurs propres définissant le trièdre propre de chacune des ondes, en se référant par exemple à celle décrite dans le brevet FR 2.614.997 (US 4,881,207) du demandeur. En comparant les orientations de ces vecteurs propres, il est possible de détecter d'éventuelles successions d'ondes de compression et de cisaillement (cas où les premiers vecteurs propres des deux arrivées considérées sont orthogonaux entre eux) ou bien d'étudier s'il s'agit de signaux correspondant à des multiplets (signaux présentant des signatures analogues en un même point de réception mais acquis à des instants différents).

### Avantages de la méthode

La méthode selon l'invention consiste donc pour l'essentiel, on l'a vu, à évaluer la fréquence dominante de chaque signal acquis et à utiliser la pseudo-période correspondant à cette fréquence dominante pour investiguer un signal intégral S codé en binaire et sommé établi à partir du signal initial brut. Par un jeu de quelques paramètres tels que w, n₁, n₂ et th1, ajustables en fonction des conditions locales d'acquisition des signaux, on peut affiner la détection pour un jeu de données particulier (représentatif d'un site de réception de signaux par exemple). La méthode est auto-adaptative car elle tient compte des signaux acquis par le biais des valeurs M, σ, S_{M}, F_{dom}, np (étapes I-5, II-1 et II-4 notamment).

Elle permet la détection automatique de l'arrivée d'une onde sismique (ou de tout autre nature) avec une très bonne précision, cette précision pouvant même être améliorée automatiquement en effectuant une analyse en polarisation à la suite de cette détection, ce qui est particulièrement utile lorsque le début du signal est noyé dans le bruit.

Elle contribue à la localisation automatique des événements microsismiques présentant une succession d'ondes de compression et de cisaillement.

De même, elle contribue à la localisation automatique des événements sismiques ou microsismiques acquis sur un nombre suffisant de capteurs suffisamment espacés (4 par exemple) en permettant une triangulation automatique à partir des temps d'arrivée ainsi déterminés, le modèle de vitesse étant connu par ailleurs.

Elle contribue à l'identification automatique des mécanismes au foyer lorsqu'elle est appliquée en un nombre suffisant de récepteurs sismiques ayant enregistré un événement donné.

La méthode a été décrite principalement dans le cadre d'applications à l'analyse de signaux sismiques ou micro-sismiques. On ne sortirait pas du cadre de l'invention en l'utilisant aussi notamment en analyse de la parole pour le repérage de signaux successifs distincts.

## Revendications

1. Méthode d'analyse de signaux acquis provenant d'au moins un capteur d'ondes pour pointer automatiquement avec une grande précision sur chacun de ces signaux, au moins un instant significatif (ti, tf), **caractérisée en ce qu'**elle comporte :
- la détermination de la pseudo-période correspondant à l'inverse de la fréquence dominante du spectre de fréquence d'au moins une partie de chaque signal acquis,
- le codage de chaque signal acquis pour former un signal codé en binaire par référence à une première valeur-seuil (TH1) dépendant du signal acquis,
- la formation pour chacun d'eux d'un signal intégral (S) par sommation du signal codé en binaire sur une fenêtre glissante, dont la largeur dépend de la pseudo-période, de manière à déterminer une deuxième valeur-seuil (TH2), et le positionnement de l'instant significatif (ti, tf) sur le signal acquis par référence à un instant où le signal intégral correspondant atteint cette deuxième valeur-seuil (TH2).

2. Méthode selon la revendication 1, **caractérisée en ce que** le positionnement de l'instant significatif (ti, tf) de chaque signal acquis comporte une détermination d'un premier point de référence où l'amplitude du signal intégral correspondant (S) est égal à cette deuxième valeur-seuil (TH2), la détection d'un premier instant intermédiaire (LP0) entre ce premier point de référence et la borne la plus proche du dit signal intégral, la détection d'un deuxième instant intermédiaire entre ce premier instant intermédiaire (LP₀) et la borne opposée du signal intégral où un premier maximum (S_{M}) de ce signal intégral dépasse une troisième valeur-seuil (TH3) dépendant du signal acquis, et le repérage de l'instant significatif recherché sur le signal acquis à un quart de pseudo-période du deuxième instant intermédiaire.

3. Méthode selon la revendication 1 ou 2, **caractérisée en ce que** l'instant significatif est l'instant (ti) de première arrivée de chaque signal acquis.

4. Méthode selon la revendication 2, **caractérisée en ce que** l'instant significatif est l'instant (tf) de fin de chaque signal acquis.

5. Méthode selon la revendication 1, **caractérisée en ce que** l'on détermine l'instant (ti) de la première arrivée du signal acquis et l'instant (tf) de fin de chaque signal acquis et l'on isole sur les enregistrements des signaux reçus par chaque capteur d'ondes, des parties d'enregistrement entre ces deux instants.

6. Méthode selon la revendication 5, **caractérisée en ce que** l'on isole toutes les parties d'enregistrement délimitées par les dits instants significatifs, de manière à détecter toutes les arrivées distinctes sur un même capteur d'ondes.

7. Méthode selon la revendication 3, dans laquelle on analyse les signaux reçus respectivement par une pluralité de capteurs d'ondes relatifs à un même événement générateur de signaux élastiques, **caractérisée en ce qu'**elle comporte la détermination de la polarisation de chaque signal acquis immédiatement après son instant de première arrivée (ti) et la détection des arrivées successives d'ondes de compression et d'ondes de cisaillement par comparaison des orientations des vecteurs propres liés aux polarisations respectives de ces signaux.

8. Méthode selon la revendication 3, dans laquelle on analyse les signaux reçus respectivement par une pluralité de capteurs d'ondes relatifs à un même événement générateur de ces signaux, **caractérisée en ce qu'**elle comporte la détermination de la polarisation de chaque signal acquis immédiatement après son instant de première arrivée (ti) et la détection de multiplets par comparaison des orientations des vecteurs propres liés aux polarisations respectives de ces signaux.

9. Méthode selon l'une des revendications précédentes, **caractérisée en ce que** l'on repère des instants significatifs distincts sur des signaux de parole.

## Patentansprüche

1. Verfahren zur Analyse erfasster, aus einem Wellensensor stammender Signale, um automatisch mit großer Genauigkeit an jedem dieser Signale wenigstens einen signifikanten Zeitpunkt (ti, tf) zu markieren, **dadurch gekennzeichnet, dass** es umfasst:
a. die Bestimmung der Pseudoperiode, die dem Kehrwert der dominanten Frequenz des Frequenzspektrums wenigstens eines Teils jedes erfassten Signals entspricht,
b. die Codierung jedes erfassten Signals, um unter Bezugnahme auf einen ersten, vom erfassten Signal abhängigen Schwellenwert (TH1) ein binär codiertes Signal zu bilden,
c. für ein jedes hiervon die Bildung eines Integralsignals (8) durch Summieren des binär codierten Signals über ein Wanderfenster, dessen Breite von der Pseudoperiode abhängt, derart, dass ein zweiter Schwellenwert (TH2) bestimmt wird, und die Positionierung des signifikanten Zeitpunktes (ti, tf) am erfassten Signal unter Bezugnahme auf einen Zeitpunkt, zu dem das entsprechende Integralsignal diesen zweiten Schwellenwert (TH2) erreicht.

2. Verfahren nach Anspruch 1, **dadurch gekennzeichnet, dass** die Positionierung des signifikanten Zeitpunkts (ti, tf) jedes erfassten Signals eine Bestimmung eines ersten Bezugspunktes, bei dem die Amplitude des entsprechenden Integralsignals (S) gleich diesem zweiten Schwellenwert (TH2) ist, die Detektion eines ersten Zwischenzeitpunktes (LP₀) zwischen diesem ersten Bezugspunkt und dem nächsten Grenzwert dieses Integralsignals, die Detektion eines zweiten Zwischenzeitpunktes zwischen diesem ersten Zwischenzeitpunkt (LP₀) und dem entgegengesetzten Grenzwert des Integralsignals, wo ein erstes Maximum (S_{M}) dieses Integralsignals einen dritten, vom erfassten Signal abhängigen Schwellenwert (TH3) überschreitet, und die Markierung des gesuchten signifikanten Zeitpunktes am erfassten Signal bei einem Viertel der Pseudoperiode des zweiten Zwischenzeitpunktes umfasst.

3. Verfahren nach Anspruch 1 oder 2, **dadurch gekennzeichnet, dass** der signifikante Zeitpunkt der Zeitpunkt (ti) der ersten Ankunft jedes erfassten Signals ist.

4. Verfahren nach Anspruch 2, **dadurch gekennzeichnet, dass** der signifikante Zeitpunkt der Zeitpunkt (tf) des Endes jedes erfassten Signals ist.

5. Verfahren nach Anspruch 1, **dadurch gekennzeichnet, dass** der Zeitpunkt (ti) der ersten Ankunft des erfassten Signals und der Zeitpunkt (tf) des Endes jedes erfassten Signals bestimmt werden und an den Aufzeichnungen der von jedem Wellensensor empfangenen Signale Aufzeichnungsteile zwischen diesen beiden Zeitpunkten isoliert werden.

6. Verfahren nach Anspruch 5, **dadurch gekennzeichnet, dass** sämtliche Aufzeichnungsteile, die durch diese signifikanten Zeitpunkte begrenzt sind, derart isoliert werden, dass sämtliche unterschiedlichen Ankünfte an ein und demselben Wellensensor detektiert werden.

7. Verfahren nach Anspruch 3, bei dem die Signale analysiert werden, die jeweils durch eine Vielzahl von Wellensensoren empfangen werden, die ein und dasselbe, elastische Signale erzeugende Ereignis betreffen, **dadurch gekennzeichnet, dass** es die Bestimmung der Polung jedes erfassten Signals unmittelbar nach seinem Zeitpunkt der ersten Ankunft (ti) und die Detektion der aufeinanderfolgenden Ankünfte von Kompressionswellen und Scherungswellen durch Vergleich der Orientierungen der Eigenvektoren umfasst, die mit den jeweiligen Polungen dieser Signale verknüpft sind.

8. Verfahren nach Anspruch 3, bei dem die Signale analysiert werden, die jeweils durch eine Vielzahl von Wellensensoren empfangen werden, die ein und dasselbe, diese Signale erzeugende Ereignis betreffen, **dadurch gekennzeichnet, dass** es die Bestimmung der Polung jedes erfassten Signals unmittelbar nach seinem Zeitpunkt der ersten Ankunft (ti) und die Detektion von Multipletts durch Vergleich der Orientierungen der Eigenvektoren umfasst, die mit den jeweiligen Polungen dieser Signale verknüpft sind.

9. Verfahren nach einem der vorhergehenden Ansprüche, **dadurch gekennzeichnet, dass** unterschiedliche signifikante Zeitpunkte an Sprachsignalen markiert werden.

## Claims

1. Method for analysis of acquired signals from at least one wave sensor to automatically locate with high precision in each of these signals at least one significant instant (ti, tf), ***characterised by** the fact that* it includes:
- determination of the pseudo-period corresponding to the inverse of the dominant frequency of the frequency spectrum of at least a part of each acquired signal,
- coding of each acquired signal to form a binary coded signal by reference to a first threshold value (TH1) dependent on the acquired signal,
- formation for each of them of an integral signal (S) by stacking the binary coded signal in a sliding window, the width of which depends on the pseudo-period, so as to determine a second threshold value (TH2), and positioning the significant instant (ti, tf) of the acquired signal by reference to an instant at which the corresponding integral signal attains this second threshold value (TH2).

2. Method as described in claim 1, ***characterised by** the fact that* the positioning of the significant instant (ti, tf) of each acquired signal includes determination of a first reference point at which the amplitude of the corresponding integral signal (S) is equal to this second threshold value (TH2), detection of a first intermediate instant (LPO) between this first reference point and the closest boundary of the said integral signal, detection of a second intermediate instant between this first intermediate instant (LP₀) and the opposite boundary of the integral signal at which a first maximum (S_{M}) of this integral signal exceeds a third threshold value (TH3) dependent on the acquired signal, and setting the significant instant sought in the acquired signal at a quarter of a pseudo-period from the second intermediate instant.

3. Method as described in claim 1 or 2, ***characterised by** the fact that* the significant instant is the instant (ti) of first arrival of each acquired signal.

4. Method as described in claim 2, ***characterised by** the fact that* the significant instant is the instant (tf) of ending of each acquired signal.

5. Method as described in claim 1, ***characterised by** the fact that* the instant (ti) of first arrival of the acquired signal and the instant (tf) of ending of each acquired signal are determined and, in the recordings of the signals received by each wave sensor, parts of recording between these two instants are isolated.

6. Method as described in claim 5, ***characterised by** the fact that* all the parts of recording delimited by the said significant instants are isolated so as to detect all the distinct arrivals at a same wave sensor.

7. Method as described in claim 3, in which the signals respectively received by a plurality of sensors of waves relating to a same event generating elastic signals are analysed, ***characterised by** the fact that* it includes determination of the polarisation of each acquired signal immediately after its instant of first arrival (ti) and detection of the successive arrivals of compressional waves and shear waves by comparison of the orientations of the eigenvectors linked to the respective polarisations of these signals.

8. Method as described in claim 3, in which the signals respectively received by a plurality of sensors of waves relating to a same event generating these signals are analysed, ***characterised by** the fact that* it includes determination of the polarisation of each acquired signal immediately after its instant of first arrival (ti) and the detection of multiplets by comparison of the orientations of the eigenvectors linked to the respective polarisations of these signals.

9. Method as described in one of the preceding claims, ***characterised by** the fact that* distinct significant instants are located in word signals.
